(19) Europäisches Patentamt / European Patent Office / Office européen des brevets

(11) **EP 4 647 751 A1**

(12) **EUROPEAN PATENT APPLICATION**

(43) Date of publication:
**12.11.2025 Bulletin 2025/46**

(21) Application number: **24174555.3**

(22) Date of filing: **07.05.2024**

(51) International Patent Classification (IPC):
*G01N 27/49* (2006.01)          *G01N 33/483* (2006.01)

(52) Cooperative Patent Classification (CPC):
**G01N 27/49; G01N 33/4836**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Stichting IMEC Nederland**
**6708 WH Wageningen (NL)**

(72) Inventors:
• ZEVENBERGEN, Marcel
  5706 GN Helmond (NL)
• ABBAS, Yawar
  5702 LD Helmond (NL)
• OUDENHOVEN, Jozef
  5658 AR Eindhoven (NL)
• MATHWIG, Klaus
  5611 ND Eindhoven (NL)

(74) Representative: **AWA Sweden AB**
**Box 5117**
**200 71 Malmö (SE)**

(54) **A DEVICE AND A METHOD FOR AMPEROMETRIC SENSING**

(57)      A device (100; 200; 300; 400; 500; 600) for amperometric sensing comprises: an enclosing structure (110; 210) defining a sensing volume (102; 202, 204a-e; 304a-e; 404a-c; 504a-c; 604a-c) and comprising at least one circumferential wall (112; 212; 412; 512), wherein the enclosing structure defines an inlet (114; 414; 514) in or at an end of the circumferential wall for allowing a target analyte to enter the sensing volume, an electrode (130; 230; 330a-e; 430; 530; 630) arranged in the sensing volume and displaced from the inlet; and a read-out circuitry (140; 240; 640) connected to the electrode and configured for read-out of an electrical signal from the electrode within a time frame during which a target analyte depletion layer around the electrode expands along the circumferential wall and is substantially contained within the sensing volume, wherein the electrical signal is representative of a concentration of the target analyte.

Fig. 2

EP 4 647 751 A1

## Description

Technical field

The present description relates to amperometric sensing.

Background

Amperometric sensors are electrochemical fluidic sensors in which an electrical signal (typically a voltage signal) is applied between two electrodes arranged in a fluid. An electroactive target analyte may then react with an electrode and produce another electrical signal (typically a current signal) which scales with concentration of the target analyte.

Miniaturization of the electrodes may be beneficial in many applications. Miniaturization of the electrodes reduces costs of the amperometric sensor and allows providing a small form factor of the amperometric sensor, which may be especially advantageous if multiple sensors are to be integrated in a single device.

For small electrodes, such as electrodes having a size of 100 $\mu$m or less, diffusion of the target analyte in the fluid limits a steady-state current of the electrode. The steady-state current $I_{ss}$ then linearly scales with concentration of the target analyte. This implies that the steady-state current may be used for sensing the concentration of the target analyte.

However, the sensing of the concentration of the target analyte requires that the steady-state current is not affected by other factors.

Summary

An objective of the present description is to provide an amperometric sensor for accurate measurements. A particular objective of the present description is to provide an amperometric sensor that is insensitive to external factors that may affect diffusion of the target analyte to the electrode.

These and other objectives are at least partly met by the invention as defined in the independent claims. Preferred embodiments are set out in the dependent claims.

According to a first aspect, there is provided a device for amperometric sensing, said device comprising: an enclosing structure defining a sensing volume, wherein the enclosing structure comprises at least one circumferential wall defining an extension of the sensing volume along the circumferential wall, wherein the enclosing structure defines an inlet in the circumferential wall or at an end of the circumferential wall, wherein the inlet is configured to allow a target analyte to enter the sensing volume, an electrode arranged in the sensing volume and displaced from the inlet, wherein the circumferential wall extends from a location of the electrode to the inlet; and a read-out circuitry connected to the electrode and configured for read-out of an electrical signal from the electrode, wherein the read-out circuitry is configured to read out the electrical signal within a time frame during which a target analyte depletion layer around the electrode expands along the circumferential wall and is substantially contained within the sensing volume, wherein the electrical signal is representative of a concentration of the target analyte in the sensing volume.

It is an insight of the invention that the electrical signal, such as a current signal, read out from an electrode in direct contact with a fluid only scales exclusively with concentration of the target analyte if the fluid is stagnant. In case, there is a flow in the fluid, the electrical signal scales with both concentration and with fluid velocity. This implies that the concentration of the target analyte may not be correctly determined when a fluid flow is present.

Thanks to the amperometric sensor of the first aspect, measurement of the electrical signal may be performed in a manner such that the measurement may be insensitive to a fluid flow. The amperometric sensor provides a sensing volume in which a fluid with the target analyte may be stagnant. The amperometric sensor may thus be arranged in an environment wherein fluid flow is allowed or may not be avoided and may still be able to provide accurate measurements of concentration of the target analyte.

For instance, the amperometric sensor is particularly suitable to be used in relation to a bulk volume. The amperometric sensor may thus provide accurate measurement of concentration of the target analyte, even though fluid flow, such as turbulent, laminar or unknown fluid flow, is present in the bulk volume.

When amperometric sensing is initiated, concentration of the target analyte around the electrode will be reduced due to the reaction of the target analyte with the electrode. This causes a depletion layer to be formed around the electrode, providing a concentration gradient of the target analyte (having a decreasing concentration of the target analyte in the sensing volume closer to the electrode). After initiating of the amperometric sensing, the depletion layer expands over time away from the electrode. This implies that the measured signal changes over time.

The enclosing structure may define a small sensing volume in the device. This may be advantageous in ensuring that a form factor of the device is small. However, having a small sensing volume may also imply that the depletion layer expands towards the inlet. If the device is used in a bulk volume, wherein fluid flow in the bulk volume is present, the fluid flow in the bulk volume may start affecting measurements of the electrical signal if the depletion layer expands substantially out of the inlet and into the bulk volume. Thus, by reading out the electrical signal while the depletion layer is at least substantially contained in the sensing volume, the read out electrical signal is insensitive to any fluid flow in the bulk volume outside the sensing volume.

Thanks to providing the enclosing structure defining a sensing volume and by performing measurements in a limited time frame, the amperometric sensor allows sensing a target analyte in a manner insensitive to conditions in an environment surrounding the enclosing structure, such as fluid flow in a bulk volume.

As used herein, the term enclosing structure means any structure that clearly defines perimeters of a sensing volume. The enclosing structure does not completely seal off the sensing volume. Rather, a fluid may pass into the sensing volume at least at the inlet at the end of the circumferential wall.

The enclosing structure may provide walls at all sides of the sensing volume. It should be realized that the circumferential wall may be bent such that a lateral surface defining the sensing volume may be provided by a single circumferential wall. The sensing volume may possibly have an open side at the inlet such that the sensing volume would be defined at this side by an imaginary line or plane at the end of the circumferential wall(s).

The enclosing structure may define a dead end in the sensing volume at an opposite end to the inlet. The electrode may be arranged at a surface defining the dead end or at least in vicinity of the dead end. This implies that the electrode may be displaced in the sensing volume as far from the inlet as possible. This also implies that the depletion layer can expand through almost the entire sensing volume while still being contained in the sensing volume.

The enclosing structure may comprise a plurality of connected circumferential walls at different sides around the sensing volume. However, as mentioned above, a single circumferential wall may provide a lateral surface that surrounds a cross-section of the sensing volume. The circumferential wall(s) may also define a surface at an end facing the inlet.

The sensing volume may have a regular shape, such as having a uniform cross-section along the circumferential wall. However, the sensing volume may have an arbitrary shape.

It should be realized that the circumferential wall(s) may be formed on a substrate, such as a flat substrate, which may further be configured to carry other components of the device. Thus, the substrate may contribute to defining the sensing volume. The substrate may be arranged at an end facing the inlet but may alternatively be arranged such that the sensing volume extends along the substrate (and along a circumferential wall arranged on the substrate) to the inlet.

It should further be realized that there may be at least one further (small) opening in the enclosing structure. This may facilitate escape of air or another gas from the sensing volume when the sensing volume is filled by a fluid carrying the target analyte through the inlet.

The enclosing structure may define a well. For instance, the end(s) of the circumferential wall(s) may be flush with a surface of a carrier structure, such as a planar carrier structure, forming the inlet at the surface, wherein the well extends into the carrier structure. Alternatively, the enclosing structure may be defined by walls extending from a surface of the carrier structure forming a well above the surface of the carrier structure.

The sensing volume may have a longitudinal extension along the circumferential wall. This may ensure that, if the device is arranged in a fluid such that there is fluid flow external to the sensing volume, the fluid flow may not affect the fluid in the sensing volume. The longitudinal extension of the sensing volume may be defined from the inlet to an opposing end of the sensing volume facing the inlet, wherein the end of the sensing volume facing the inlet may be a dead end.

It should further be realized that the enclosing structure may according to an embodiment define dead ends at both ends of the longitudinal extension of the sensing volume. The inlet may instead be provided at a lateral side in the circumferential wall.

The enclosing structure may define the sensing volume such that the sensing volume is substantially separated from any fluid flow in a volume external to the sensing volume. Thus, the enclosing structure may have a relatively large aspect ratio between a distance $h$ from the inlet to the opposing end and a size a of the inlet. For instance, the aspect ratio h/a may be larger than 2, which may imply that any fluid flow external to the sensing volume may not significantly enter the sensing volume.

The size of the inlet may be defined by a characteristic dimension of the inlet. Thus, if the inlet has a circular shape, the size of the inlet corresponds to a diameter of the inlet, whereas, if the inlet has a square shape, the size of the inlet corresponds to a side length of the inlet.

The inlet being configured to allow a target analyte to enter the sensing volume implies that the target analyte may enter the sensing volume so as to be present in the sensing volume. The inlet need not be associated with a fluid flow into the sensing volume. Rather, the target analyte may enter the sensing volume through diffusion.

The electrode is configured to provide an interface at which an electrical signal may enter a medium in the sensing volume. The electrode may thus be formed by an electrically conducting material, such as a metal. The electrode is arranged displaced from the inlet. The electrode may be arranged at or close to the opposing end of the enclosing structure facing the inlet. This implies that the depletion layer formed around the electrode needs to expand a long distance in order to reach the inlet. However, the electrode may be differently arranged in the sensing volume and timing of the read out of the electrical signal may then be adjusted accordingly.

The electrode may be arranged on a surface of the enclosing structure. For instance, the electrode may be arranged on the circumferential wall, but the electrode may alternatively be arranged on a surface of the carrier structure, such as arranged at the opposing end of the enclosing structure.

The electrode may provide an electrical signal in form of a current signal. For instance, a voltage may be applied at least in the sensing volume causing the target analyte to be drawn towards the electrode. The reaction by the target analyte with the electrode may thus affect a current signal which may be read out for determining information of the target analyte. However, it should be realized that, alternatively, a current may be applied in the sensing volume and a voltage signal may be read out. It should further be realized that the voltage or current being applied in the sensing volume may be provided using an additional electrode, such as a reference electrode and/or a counter electrode, which may be arranged in or outside the sensing volume. The additional electrode may be part of the device but may alternatively be external to the device.

The depletion layer is formed around the electrode during measurements providing a concentration gradient of the target analyte in the sensing volume A boundary of the depletion layer may be estimated as being at a distance L from the electrode, where

$$L = \sqrt{\pi D t}$$

, where $D$ is a diffusion coefficient of the target analyte in the sensing volume, and $t$ is a time passed after applying a voltage or current to the sensing volume for initiating a measurement.

The depletion layer may be configured at the location of the electrode to extend across an entire cross-section of the sensing volume perpendicular to the extension of the sensing volume along the circumferential wall. As target analyte is consumed by reaction with the electrode, the depletion layer expands in all directions extending away from the electrode. Since the depletion layer fills the entire cross-section of the sensing volume, the depletion layer may then only expand along the circumferential wall towards the inlet. If the electrode is not arranged at the opposing end facing the inlet, the depletion layer may also initially expand toward the opposing end until the depletion layer reaches a surface of the enclosing structure at the opposing end.

The expansion of the depletion layer may define a linear movement along the circumferential wall.

The target analyte depletion layer being substantially contained within the sensing volume implies that the depletion layer is mainly arranged within the sensing volume and is only extending out of the sensing volume to such a small extent as not to be affected by external factors, such as fluid flow external to the sensing volume. It should further be realized that a concentration gradient of the target analyte may be small at a boundary of the depletion layer, such that external factors may not affect measurements by the device even if the depletion layer extends somewhat out of the sensing volume.

According to an embodiment, the read-out circuitry is configured to read out the electrical signal within a time frame during which a target analyte depletion layer around the electrode expands along the circumferential wall and is contained within the sensing volume. This implies that the depletion layer may not extend outside the sensing volume when the electrical signal is read out. This may ensure that the measurement is insensitive to external factors.

The read-out circuitry may be controlled such that the electrical signal is read out within a short time frame before the depletion layer reaches the inlet or at least before the depletion layer extends substantially out of the inlet. This implies that measurements by the device are not sensitive to external factors. The time frame may be defined in relation to a start of measurements based on reaction by the target analyte with the electrode being initiated, e.g., based on a voltage or current being applied to the sensing volume.

It should be realized that the read out electrical signal does not correspond to a steady-state current. The electrical signal that is read out may thus be a transient signal which varies during the time frame. The read-out circuitry may be configured to read out a time sequence of electrical signal values, representing a curve of the transient signal during the time frame. For instance, integration of the curve may be performed and is related to the concentration of the target analyte in the sensing volume. The read-out circuitry may alternatively be configured to read out one or a few electrical signal values at given time points within the time frame. For instance, the electrical signal may be read out at a single given time point which is at an end of the time frame before, such as shortly before, the target analyte depletion layer extends substantially out of the sensing volume. It should be realized that the single given time point may be before, such as shortly before, the target analyte depletion layer reaches the inlet. The read out electrical signal is related to the concentration of the target analyte in the sensing volume.

According to an embodiment, the electrode is configured to generate the electrical signal based on the electrochemical reaction of the target analyte.

The device may be used for amperometric sensing of any molecule that is electrochemically reactive. The device may for instance be used for detection of oxygen, but other electrochemically reactive molecules may alternatively be detected.

According to an embodiment, the device may further comprise a substrate, wherein the circumferential wall is arranged on the substrate.

This may be advantageous as the substrate may be used for carrying other components in addition to the circumferential wall. Thus, the definition of the sensing volume in relation to the substrate enables additional functionalities to be provided in relation to the amperometric device. For instance, a plurality of sensing volumes may be defined in relation to the same substrate, which may be used for providing an array of sensing sites for amperometric sensing. Also, other sensors may be arranged on the same substrate.

The substrate may for instance be a semiconductor substrate facilitating electronic circuitry to be provided on or in the substrate. Thus, an integrated circuit may be provided.

The substrate may be planar providing a surface extending over a relatively large area, whereas the substrate may have a thickness perpendicular to the surface being smaller than dimensions of the surface.

The substrate may form part of the enclosing structure. For instance, the circumferential wall may be formed immediately on the substrate. However, it should be realized that an intermediate layer may be formed on the substrate. The enclosing structure may thus be formed in the intermediate layer.

For instance, the enclosing structure may be defined as a well in the intermediate layer. The well may extend entirely through the intermediate layer, such that a bottom surface may be defined by the substrate. Alternatively, the bottom surface of the well may be defined in the intermediate layer.

According to an embodiment, the read-out circuitry is formed in a layer extending along the substrate.

Thus, the read-out circuitry may be provided in or on the substrate. This implies that the read out of electrical signals may be provided in an integrated and compact device.

The electrode may be arranged on a surface of the substrate. This may facilitate connecting the electrode to the read-out circuitry for read out of the electrical signal. However, it should be realized that the electrode need not necessarily be arranged on the surface of the substrate. Rather, the electrode may alternatively be arranged on a surface of a circumferential wall arranged on the substrate.

According to an embodiment, the circumferential wall is configured to extend vertically from the substrate.

Thus, the inlet may be arranged at an end of the circumferential wall facing the substrate. The enclosing structure may for instance define a well. This may provide a simple structure that may be easily manufactured, e.g., by etching into a surface of a layer on the substrate for defining the sensing volume.

According to an alternative embodiment, the circumferential wall is configured to extend horizontally along the substrate.

In this case, the sensing volume may extend along a surface of the substrate, such that the extension of the sensing volume may be partly defined by a surface of the substrate or a surface of a layer arranged on the substrate. The sensing volume may for instance be defined as a channel extending on the substrate. The channel may have a straight extension or may follow a curved path on the substrate.

The channel may have a wall defining a dead end such that the sensing volume may extend along the surface of the substrate from the inlet to the dead end.

This may be suitable for providing amperometric sensing in relation to a microfluidic system. It should be realized that no fluid flow should be provided in the sensing volume during measurements.

According to an embodiment, the enclosing structure comprises a plurality of intermediate walls within the sensing volume, wherein the intermediate walls are configured to divide the sensing volume into a plurality of partial volumes, wherein the intermediate walls are configured to extend along a direction of the at least one circumferential wall.

The intermediate walls may be used for providing a small cross-section of each partial volume while providing a relatively large combined sensing volume and a large combined cross-section. This may also ensure that a strong signal (large amplitude) may be acquired.

The intermediate walls may be arranged at the end of the circumferential wall for defining separate parts of the inlet to the respective partial volumes. The circumferential wall provides an outermost surface defining a boundary of the overall sensing volume. Each intermediate wall may contribute to defining two partial volumes on opposite sides of the intermediate wall.

The depletion layer in each partial volume may expand along the intermediate wall. For the partial volumes arranged in relation to the circumferential wall(s), the depletion layer expands along the circumferential wall.

It should be realized that according to an alternative, a plurality of enclosing structures may be provided for defining separate sensing volumes. The separate sensing volumes may be arranged close to each other and may still be used for providing a combined information of the target analyte.

According to an embodiment, the electrode is configured to extend into each of the partial volumes or wherein the electrode forms part of a plurality of electrodes, wherein each of the plurality of electrodes is arranged in a respective partial volume and wherein the electrodes of the plurality of electrodes are connected for sensing a combined electrical signal.

A size of the electrode may be limited by dimensions of the sensing volume. By having a plurality of partial volumes, the overall size of the sensing volume may be large without allowing fluid flow outside the sensing volume to enter the sensing volume. Further, having a large overall size of the sensing volume allows the size of the electrode to be large, which implies that a strong electrical signal may be acquired from the electrode.

For instance, the electrode may be arranged on a bottom surface of a well facing the inlet. The size of the electrode is thus limited to a cross-section (size of the bottom surface) of the well. Thanks to the partial volumes being defined, the electrode may extend into each partial volume by extending continuously over an entire bottom surface facing the parts of the inlet for all of the partial volumes. This implies that a large size of the electrode may be used allowing read out of a strong electrical signal. The electrode extending into several partial volumes implies that a single electrode is used for acquiring the electrical signal from the plurality of partial volumes. Thus, the contribution to the electrical signal from the partial volumes is immediately combined by the electrode being a coherent unit extending into the partial volumes. This may be a simple manner of providing a combined, strong electrical signal.

However, each partial volume may be provided with a separate electrode. For instance, electrodes may be arranged on the bottom surface of each partial volume. These electrodes may be connected, such as shortcircuited. This implies that even though separate electrodes may be provided in the respective partial volumes, the read-out circuitry may read out a single combined electrical signal, facilitating that a strong electrical signal is acquired.

According to an embodiment, the circumferential wall is tapered. This implies that a cross-section of the sensing volume may increase or decrease from the inlet towards an opposing end. This may be useful for limiting fluid flow external to the sensing volume from entering the sensing volume.

In addition, forming of a tapered circumferential wall may be simple and may follow inherently from the sensing volume being defined by etching into a layer.

According to an embodiment, the inlet is configured to be arranged in relation to a bulk volume for receiving target analyte into the sensing volume from the bulk volume.

Thus, the device may be provided for amperometric sensing in relation to a bulk volume. This implies that the device may be very simple to use while being insensitive to fluid flow in the bulk volume.

For instance, the device may be configured to be arranged in a bioreactor for providing sensing of a target analyte in the bioreactor. The bulk volume of fluid in the bioreactor may be subject to fluid flow for instance by stirring of the fluid in the bulk volume. However, thanks to the device for amperometric sensing being insensitive to such fluid flow, the device may be arranged inside the bioreactor for providing measurements during an ongoing process in the bioreactor.

However, it should be realized that the device need not necessarily be arranged in relation to a bulk volume. Thus, the target analyte need not necessarily be provided into the sensing volume from a bulk volume.

According to an embodiment, the read-out circuitry is configured to read out the electrical signal within the time frame $\tau$ defined by:

$$\tau < k \frac{h^2}{\pi D},$$

wherein k is a scaling factor, which is smaller than or equal to 20, such as smaller than or equal to 10, $h$ is a length along the circumferential wall between the location of the electrode and the inlet, and D is a diffusion coefficient of the target analyte in the sensing volume.

The read-out of the electrical signal within the time frame defined in the above manner may ensure that the depletion layer is substantially contained within the sensing volume when the electrical signal is read out. Using a scaling factor being smaller than or equal to 20 may be sufficient to ensure that the depletion layer is substantially contained within the sensing volume, such that even though the depletion layer may extend out of the inlet, the read out electrical signal is still not affected by external factors. However, using a scaling factor being smaller than or equal to 10 provides further margin to definitely ensure that the read out electrical signal is still not affected by external factors.

According to an embodiment, the scaling factor may be smaller than or equal to 1. This may imply that the target analyte depletion layer is contained within the sensing volume when the electrical signal is read out. This may certainly ensure that the read out electrical signal is not affected by external factors.

According to another embodiment, the scaling factor may be between 1 and 20, such as between 1 and 10. This may imply that the time frame in which the electrical signal is read out is sufficiently small for the read out electrical signal not to be affected by external factors, while the electrical signal being read out only slightly before the electrical signal may be affected by external factors. This may imply that requirements on fast read-out are as lenient as possible.

The definition of the time frame may be used for controlling timing of the read-out. This may be used for changing a timing of the read-out in dependence of use of the device. Thus, based on the target analyte to be sensed at a particular occasion, the device may be controlled for ensuring that the timing of the read-out is adapted to the diffusion coefficient of the target analyte.

However, it should be realized that the device may be set to use a default timing of read-out, wherein the device may be configured such that, for any target analyte that is to be sensed by the device, the read-out circuitry will read out the electrical signal within the time frame as defined above.

According to an embodiment, a length, h, along the circumferential wall from the location of the electrode to the inlet is larger than or equal to half of a maximum width, w, of a cross-section of the sensing volume at the location of the electrode. In other words, the enclosing structure may be configured such that 2h > w.

This may ensure that the device may be insensitive to a fluid flow external to the sensing volume.

According to an embodiment, the device further comprises an additional electrode configured to apply a voltage at least to the sensing volume.

Thus, the device may be configured to apply a voltage difference between the electrode and the additional electrode. This voltage difference may drive the target analyte towards the electrode for enabling sensing of the electrical signal.

Thus, measurements may be initiated by providing a voltage signal to the electrode and/or the additional electrode so as to provide a voltage difference there-between.

According to an embodiment, the device further comprises a reference electrode providing a stable potential in the fluid comprising the target analyte.

The device may be configured to apply a voltage to the electrode with respect to the reference electrode.

The additional electrode and/or reference electrode may be arranged in the sensing volume but may alternatively and preferably be arranged outside the sensing volume. For instance, the additional electrode and/or reference electrode may be in contact with a fluid extending in and outside the sensing volume. The applied voltage may thus affect the target analyte in the sensing volume for allowing amperometric sensing to be performed.

According to an embodiment, the sensing volume comprises an anti-fouling material that is configured to at least partially block species interfering with sensing of the target analyte.

Thus, the device may be configured for sensing of a particular target analyte or a particular group of target analytes. The device may further be provided with anti-fouling material to prevent or reduce interference from other species, such as other molecules or substances.

The anti-fouling material may be provided on a surface of the electrode. The anti-fouling material may additionally or alternatively be provided on a surface of a circumferential wall defining the sensing volume.

In some embodiments, the anti-fouling material may partially fill, completely fill, or completely fill and further extend beyond the sensing volume. In such case, the anti-fouling material may be arranged at the inlet of the enclosing structure, such that the target analyte may enter the sensing volume through the anti-fouling material. In addition, diffusion of the target analyte in the sensing volume may at least partly be defined by a diffusion coefficient of the target analyte through the anti-fouling material. This will thus affect the time frame during which the depletion layer is substantially contained within the sensing volume and the read-out circuitry may be controlled accordingly for ensuring that the electrical signal is properly read out.

According to an embodiment, the anti-fouling material may comprise one or a combination of polyhydroxyethylmethacrylate (pHEMA), polyethyleneglycol (PEG), zwitterions, polyeugenol.

This may be suitable for blocking undesired species, such as proteins or other compounds that may otherwise cause fouling of the electrode.

According to a second aspect, there is provided a method for amperometric sensing, said method comprising: sensing a target analyte using an electrode arranged in a sensing volume, wherein the sensing volume is defined by an enclosing structure comprising at least one circumferential wall defining an extension of the sensing volume along the circumferential wall, wherein the enclosing structure defines an inlet in the circumferential wall or at an end of the circumferential wall, wherein the inlet is configured to allow the target analyte to enter the sensing volume; reading out an electrical signal from the electrode, wherein read out of the electrical signal is performed within a time frame during which a target analyte depletion layer around the electrode expands along the circumferential wall and is substantially contained within the sensing volume, wherein the electrical signal is representative of a concentration of the target analyte in the sensing volume.

Effects and features of the second aspect are largely analogous to those described above in connection with the first aspect. Embodiments mentioned in relation to the second aspect are largely compatible with the first aspect.

Thanks to providing the enclosing structure defining a sensing volume and by performing measurements in a limited time frame, the method allows sensing a target analyte in a manner insensitive to conditions in an environment surrounding the enclosing structure, such as fluid flow in a bulk volume.

## Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.

Fig. 1 is a schematic cross-sectional view of a device for amperometric sensing according to a first embodiment.

Fig. 2 is a schematic cross-sectional view of a device for amperometric sensing according to a second embodiment.

Fig. 3 is a schematic cross-sectional view of a device for amperometric sensing according to a third embodiment.

Figs 4a-b are schematic cross-sectional views of variants of a device for amperometric sensing according to a fourth embodiment.

Figs 5a-b are a schematic top view and a schematic cross-sectional view of a device for amperometric sensing according to a fifth embodiment.

Figs 6a-d are schematic cross-sectional views of variants of a device for amperometric sensing according to a sixth embodiment.

Fig. 7 is a flow chart of a method according to an embodiment.

## Detailed description

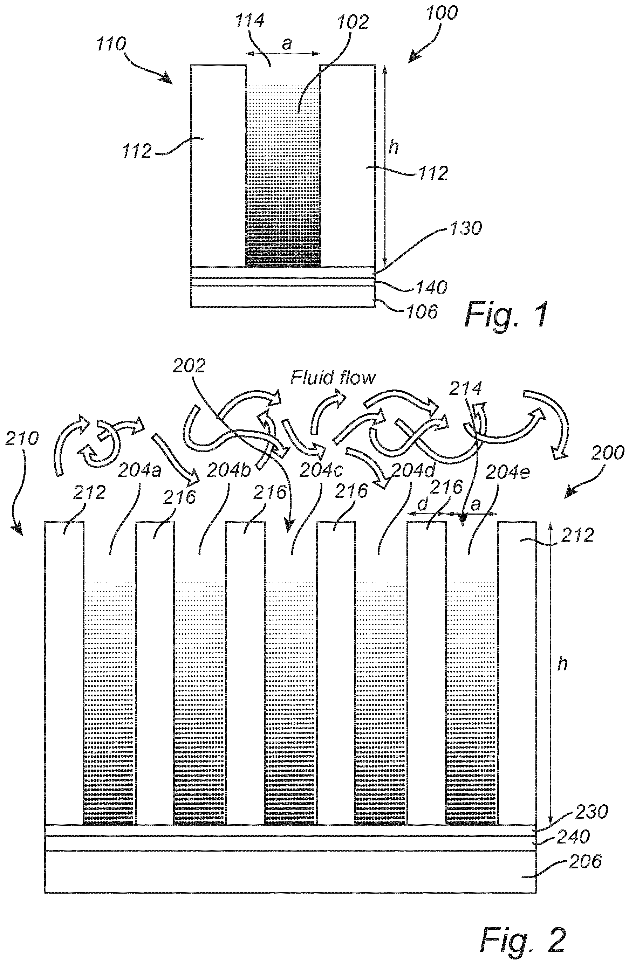

Referring to Fig. 1, a device 100 for amperometric sensing according to a first embodiment will be described. The device 100 is configured to provide amperometric sensing that is insensitive to external factors and, in particular, to fluid flow external to the device 100.

The device 100 is configured to define a sensing volume 102, such that amperometric sensing is performed in the sensing volume 102. The sensing volume 102 may be defined by an enclosing structure 110 which encloses the sensing volume 102 on all sides except for an inlet 114 through which a target analyte can enter the sensing volume 102.

As shown in Fig. 1, the enclosing structure 110 may comprise circumferential wall(s) 112 extending vertically from a substrate 106. For instance, a circumferential wall 112 with circular shape may be provided such that the sensing volume 102 is defined inside the circumferential wall 112. Alternatively, a plurality of circumferential walls 112 may be provided defining the sensing volume 102 between the circumferential walls 112. A bottom of the sensing volume 102 may further be defined by the substrate 106.

However, it should be realized that the enclosing structure 110 may be defined in many alternative ways.

As shown in Fig. 1, the inlet 114 may be provided at an end of the circumferential wall(s) 112. For instance, the circumferential wall(s) may have an open end such that the inlet 114 may be defined between or inside the circumferential wall(s) 112 at the end. The inlet 114 may thus correspond to an entire cross-section between or inside the circumferential wall(s) 112 at the end of the circumferential wall(s) 112.

The device 100 further comprises an electrode 130. The electrode 130 is arranged in the sensing volume 102. The electrode 130 may be mounted or provided on a wall of the enclosing structure 110 defining the sensing volume 102.

As shown in Fig. 1, the electrode 130 may be arranged on the substrate 106 and may extend over the entire bottom surface of the enclosing structure 110 defining the sensing volume 102.

The circumferential wall(s) 112 define an extension of the sensing volume 102 along the circumferential wall(s) 112. The electrode 130 is arranged in the sensing volume 102 such that the electrode 130 is displaced from the inlet 114. The circumferential wall(s) 112 will thus extend from a location of the electrode 130 to the inlet 114. With the electrode 130 arranged on the substrate 106, the electrode 130 is arranged as far away as possible from the inlet 114 at the end of the circumferential wall(s) 112.

The arrangement of the electrode 130 displaced in the sensing volume 102 from the inlet 114 implies that amperometric sensing measurements may be performed using the electrode 130 without fluid flow external to the sensing volume 102 affecting the measurements.

In the embodiment of Fig. 1, the electrode 130 is arranged at a maximal distance away from the inlet 114 in the sensing volume 102. However, it should be realized that the electrode 130 and the inlet 114 may be differently arranged in the enclosing structure 110. For instance, the inlet 114 may be formed in a circumferential wall 112. Thus, the inlet 114 may be formed by an opening in the circumferential wall 112. Further, the electrode 130 may be arranged at the circumferential wall 112. However, the electrode 130 should always be arranged displaced from the inlet 114 in the sensing volume 102.

In amperometric sensing, a voltage signal may be applied in the sensing volume 102. This may be achieved by providing a voltage signal to the electrode 130 and to an additional electrode (not shown) which may be provided in the sensing volume 102 or external to the sensing volume 102 in contact with a medium extending into the sensing volume 102. The applied voltage signal may generate a current signal at the electrode 130, which may be read out from the electrode 130. It should be realized that as an alternative, a current signal may be applied in the sensing volume 102 and a voltage signal may be read out from the electrode 130.

During the amperometric sensing, concentration of the target analyte in the sensing volume 102 around the electrode 130 will be reduced due to a reaction of the target analyte with the electrode 130. This causes a depletion layer (illustrated with shading in the sensing volume 102) to be formed around the electrode 130, providing a concentration gradient of the target analyte (having an increasing concentration of the target analyte in the sensing volume 102 farther away from the electrode 130). After initiating of the amperometric sensing, the depletion layer expands over time away from the electrode 130.

The depletion layer may fill an entire cross-section of the sensing volume 102 between or inside the circumferential wall(s) 112 and expand along the circumferential wall(s) 112. This implies that the depletion layer may expand in a linear direction along an extension of the sensing volume 102 along the circumferential wall(s) 112 during amperometric sensing.

The device 100 is configured to perform amperometric sensing measurements such that the depletion layer is substantially contained within the sensing volume 102. If the depletion layer extends substantially into a bulk volume outside the sensing volume 102, the amperometric sensing measurement would be affected by a fluid flow in the bulk volume.

The device 100 further comprises read-out circuitry 140 connected to the electrode 130. The read-out circuitry 140 may be arranged in any relation to the electrode 130 and may be connected to the electrode 130 via wires or conductive lines for allowing the read-out circuitry 140 to be arranged at a distance from the electrode 130.

However, the read-out circuitry 140 may be arranged close to the electrode 130. For instance, the read-out circuitry 140 may be provided as an integrated circuit in the substrate 106 in a layer extending along an extension of the substrate 106. The electrode 130 may be arranged in a layer above the read-out circuitry 140 and may be connected to the read-out circuitry 140 below. For instance, an insulating layer may be provided between the read-out circuitry 140 and a layer in which the electrode 130 is arranged, wherein the electrode 130 may be connected by a via through the insulating layer to the read-out circuitry 140.

The read-out circuitry 140 may be configured to read out an electrical signal from the electrode 130. The read-out circuitry 140 may be configured to process the electrical signal read out from the electrode 130 but may alternatively be configured to communicate the electrical signal to a processing unit (which may be arranged in an external device) for further processing of the read out electrical signal.

The read-out circuitry 140 is configured to read out the electrical signal within a short time frame from initiation of the amperometric sensing measurement. This may ensure that the depletion layer is substantially contained within the sensing volume 102 during the amperometric sensing.

Thanks to the measurement being performed while the depletion layer is at least mostly inside the sensing volume 102, external factors outside the sensing volume 102 may not affect the measurement. For instance, if the device 100 is arranged in a bulk volume of a fluid, the amperometric sensing may be insensitive to any fluid flow external to the sensing volume 102.

Thanks to the electrode 130 being displaced from the inlet 114, there is a time frame in the amperometric sensing measurement during which the depletion layer has not reached the inlet 114 and is thus contained in the sensing volume 102. If a large distance between the electrode 130 and the inlet 114 is provided, this time frame may be relatively long. However, the device 100 may be configured to provide amperometric sensing which is insensitive to external factors even if the distance between the electrode 130 and the inlet 114 is relatively short. In such case, the time frame for read-out of the electrical signal from the electrode 130 may be adjusted such that the electrical signal is still read out before expansion of the depletion layer has reached the inlet 114, or while the depletion layer is substantially contained within the sensing volume 102.

The electrical signal that is read out may thus be a transient signal which varies during the time frame. The read-out circuitry 140 may be configured to read out a time sequence of electrical signal values, representing a curve of the transient signal during the time frame. The read-out circuitry 140 may alternatively be configured to read out one or a few electrical signal values at given time points within the time frame. The read out electrical signal is related to the concentration of the target analyte in the sensing volume 102.

For instance, an integration of the curve may be performed for determining the concentration. According to an alternative, the electrical signal may be read out at a single given time point which is before, such as shortly before, the target analyte depletion layer extends substantially out of the sensing volume. It should be realized that the single given time point may be before, such as shortly before, the target analyte depletion layer reaches the inlet.

The enclosing structure 110 may define the sensing volume 102 such that the sensing volume 102 is substantially separated from external factors, such as any fluid flow in a volume external to the sensing volume 102. Thus, the enclosing structure 110 may define a relatively large distance h from the inlet 114 to an end of the sensing volume 102 farthest away from the inlet 114, at which end the electrode 130 may also be provided. In particular, the enclosing structure 110 may define a relatively large aspect ratio between the distance h and a size a of the inlet 114. For instance, the aspect ratio h/a may be larger than 2, which may imply that any fluid flow external to the sensing volume may not significantly enter the sensing volume.

The size of the inlet 114 may be defined by a characteristic dimension of the inlet 114. Thus, if the inlet 114 has a circular shape, the size of the inlet 114 corresponds to a diameter of the inlet 114, whereas, if the inlet 114 has a square shape, the size of the inlet 114 corresponds to a side length of the inlet 114.

According to an embodiment, the read-out circuitry 140 is configured to read out the electrical signal within the time frame $\tau$ defined by:

$$\tau < k\frac{h^2}{\pi D},$$

wherein k is a scaling factor, which is smaller than or equal to 20, such as smaller than or equal to 10, such as smaller than or equal to 1, *h* is a length along the circumferential wall 112 between the location of the electrode 130 and the inlet 114, and D is a diffusion coefficient of the target analyte in the sensing volume 102. This may ensure that the depletion layer is at least substantially contained within the sensing volume 102 when the electrical signal is read out.

The arrangement of the electrode 130 in a confined sensing volume 102 implies that a current signal from the electrode 130 will be reduced compared to a current signal from an electrode 130 arranged in a large volume where the depletion layer can expand freely. If the electrode 130 is arranged over an entire bottom surface of a sensing volume 102 having a circular shape with a diameter a and a height h, as indicated in Fig. 1, a steady-state current $I_{ss,r}$ of the device 100 compared to a steady-state current $I_{ss}$ of an amperometric sensor wherein the depletion layer can expand freely may be related as:

$$\frac{I_{ss,r}}{I_{ss}} = \frac{\pi}{4L + \pi},$$

where $L = h / (a / 2)$.

Thus, the device 100 may provide a reduced signal strength compared to an amperometric sensor wherein the depletion layer can expand freely.

Referring now to Fig. 2, the signal strength may be increased by combining a plurality of partial volumes. In Fig. 2, a device 200 according to a second embodiment will be described. The device 200 comprises read-out circuitry 240 similar to the read-out circuitry 140 described above for the first embodiment. For brevity and to avoid repetition, it will not be further described for the second embodiment.

As shown in Fig. 2, a large overall sensing volume 202 may be provided by combining a plurality of partial volumes 204a-e. This implies that each partial volume may be configured with dimensions ensuring that fluid flow or other external factors outside the partial volume does not affect amperometric sensing measurements. Further, electrical signals from the plurality of partial volumes may be combined such that the signal strength may be relatively large.

The enclosing structure 210 may comprise circumferential walls 212 providing an outermost definition of the overall sensing volume 202. Furthermore, the enclosing structure 210 may comprise a plurality of intermediate walls 216 extending within the sensing volume 202. The plurality of intermediate walls 216 may extend along a direction of the circumferential walls 212. Thus, partial volumes 204a-e may be defined between adjacent intermediate walls 216 within the sensing volume 202 or between an intermediate wall 216 and a circumferential wall 212. The partial volumes 204a-e may share a surface defining an end facing an inlet 214. For instance, the intermediate walls 216 may be arranged on a common substrate 206, each extending vertically on the substrate 206.

It should be realized that for a circular cross-section of the sensing volume 202, the partial volumes may be separately defined, wherein each partial volume is defined by a circumferential wall with circular shape. It should be realized that the cross-section of such a device may correspond to the cross-section shown in Fig. 2, if taken through a diameter of the partial volumes.

The electrode 230 may be configured extend on the substrate 206 over an entire area corresponding to the bottom surfaces of the partial volumes 204a-e. This implies that an electrical signal from the electrode 230 corresponds to a combined signal from all of the partial volumes 204a-e. According to an alternative, separate electrodes may be provided in each of the partial volumes 204a-e. However, these electrodes may then be connected for providing a combined electrical signal that is read out by the read-out circuitry 240.

Using a plurality of partial volumes, a total signal strength I in relation to the signal strength discussed above for the circular arrangement becomes:

$$I = n \frac{\pi}{4L + \pi} I_{ss},$$

where n is the number of partial volumes. Increasing the number of partial volumes is beneficial for sensitivity of the device 200. Therefore, a pitch d between the partial volumes should be as small as allowed by a process for fabricating the device 200.

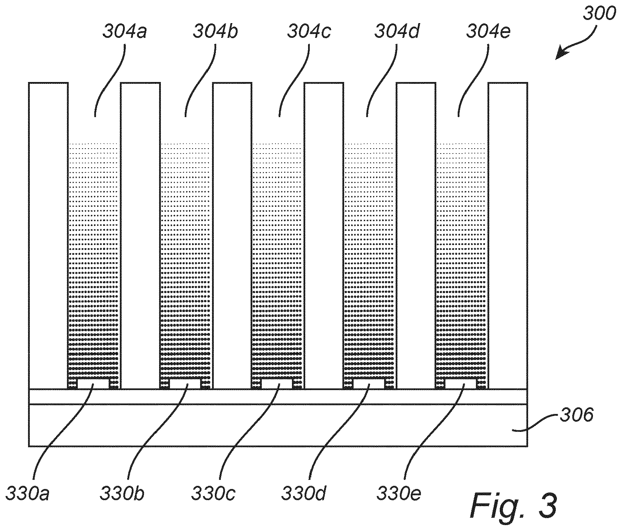

It should be realized that the device for amperometric sensing may be designed in further alternative ways. Now, some alternative arrangements will be described in relation to Figs 3-6. For brevity and to avoid repetition, only the features differentiating the embodiments from the above-described first and second embodiments will be described.

As shown in Fig. 3, the device 300 may comprise a plurality of electrodes 330a-e. Each electrode 330a-e may be arranged on the substrate 306, wherein the electrode 330a-e does not necessarily have a size corresponding to the size of the cross-section of the partial sensing volume 304a-e.

It should further be realized that the electrode 330a-e may have any shape which may or may not correspond to a shape of the cross-section of the partial volume 304a-e at the substrate 306.

Further, it should be realized that the device 400 may comprise circumferential wall(s) 412 and intermediate walls 416 which may not necessarily define a uniform cross-section of the partial volumes 404a-c through the extension along the circumferential wall(s) 412 and/or intermediate walls 416.

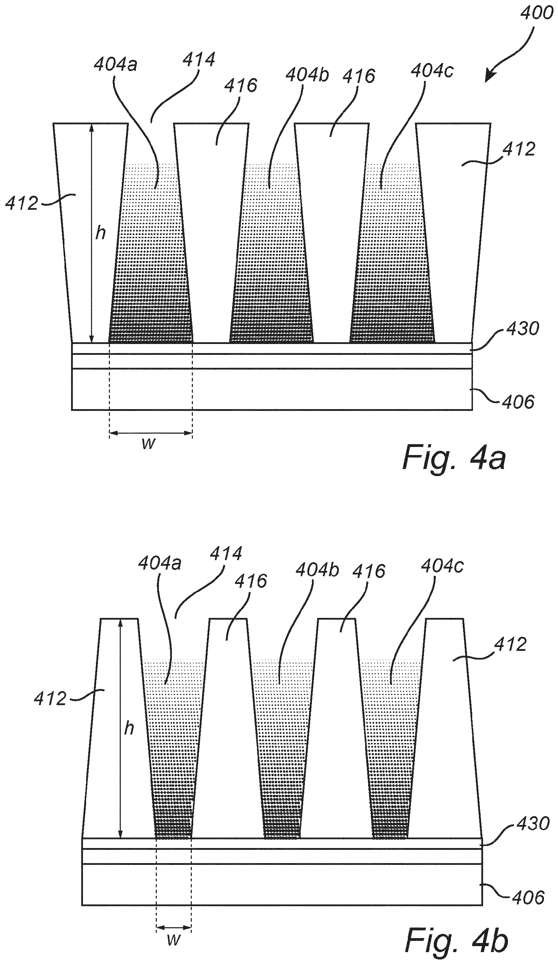

As shown in Figs 4a-b, the circumferential wall(s) 412 and intermediate walls 416 may be tapered. In Fig. 4a, the walls are tapered such that a size of the cross-section of the partial volumes 404a-c is smaller at the inlet 414 compared to the bottom of the partial volume 404a-c. In Fig. 4b, the walls are tapered such that a size of the cross-section of the partial volumes 404a-c is smaller at the inlet 414 compared to the bottom of the partial volume 404a-c.

The partial volumes 404a-c should be defined by the circumferential wall(s) 412 and intermediate walls 416 such that the length h along the wall 412 from the location of the electrode 430 to the inlet 414 is larger than or equal to half of a maximum width w of a cross-section of the partial volume 404a-c at the location of the electrode 430. In other words, the partial volume 404a-c may be designed such that 2h > w.

This may ensure that the device may be insensitive to a fluid flow external to the sensing volume.

The circumferential wall(s) 412 and intermediate walls 416 may be typically formed by using etching to form the partial volumes 404a-c in a layer arranged on the substrate 406. Thus, a material layer may be provided on the substrate 406 covering electrodes 430 which may be previously formed on the substrate 406. Then, the partial volumes 404a-c may be defined by etching forming the circumferential wall(s) 412 and intermediate walls 416 in the material layer. The inlet 414 may thus be provided at a surface of the material layer.

However, it should be realized that the circumferential wall(s) 412 and intermediate walls 416 may be formed in a different manner, such as using selective deposition of material for forming the walls on the substrate 406.

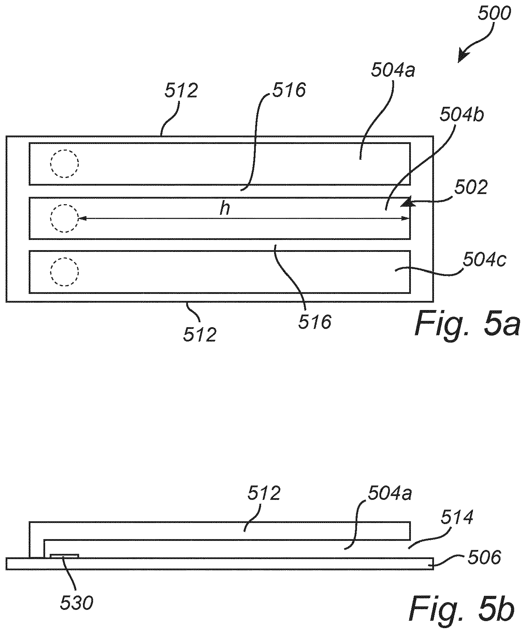

Further, it should be realized that the device 500 may comprise circumferential wall(s) 512 extending horizontally along the substrate 506. Intermediate walls 516 may be provided for dividing the sensing volume 502 into a plurality of partial volumes 504a-c extending between the substrate 506 and the circumferential wall(s) 512. This is illustrated in Figs 5a-b, wherein Fig. 5a shows a top view of the device 500 and Fig. 5b shows a cross-sectional view of the device 500.

The partial sensing volumes 504a-c may then form channels extending on the substrate 506 and the circumferential wall(s) 512. Here, the distance between the location of the electrode 530 and the inlet 514 to the partial volume 504a-c may be defined by a length of the channel along the substrate 506 and the circumferential wall(s) 512 rather than a height of the circumferential walls as described in the above embodiments.

The device 500 may still be read out in a manner insensitive to external factors based on the electrical signal being read out while the depletion layer is substantially contained within the partial volumes 504a-c.

The channel does not need to extend along a straight line but may for instance have a curved or meandering shape.

The partial sensing volumes 504a-c may be connected to a (complex) microfluidic system, which may have multiple inlets and outlets. The distance between the location of the electrode 530 and the inlet 514 to the partial volume 504a-c may then be defined as a shortest length from the electrode to fluidic connection with a sample in the microfluidic system. Even though the partial sensing volumes 504a-c may thus be connected to a microfluidic system, the amperometric sensing should be performed within a time frame during which there is no fluid flow in the microfluidic channel in which the electrode 530 is arranged.

A sensing volume 502 or partial sensing volumes 504a-c may be defined by a microfluidic channel that may be connected to a microfluidic system. The microfluidic channel may have an inlet and an outlet on opposite sides of the microfluidic channel. The microfluidic channel may be a side channel such that no fluid is forced through the channel, whereby measurements in the sensing volume 502 may be insensitive to a fluid flow.

The outlet may function as a vent hole allowing air to escape the microfluidic channel when the sensing volume 502 is filled by the fluid carrying the target analyte. The outlet could be closed before measurements are initiated to ensure that no fluid flow occurs in the microfluidic channel. The electrical signal from the electrode 530 should be read out before the target analyte depletion layer reaches the inlet or the outlet, whichever is reached first. Thus, the time frame for read out of the electrical signal may be defined based on a shortest distance between the electrode 530 and the inlet or the outlet.

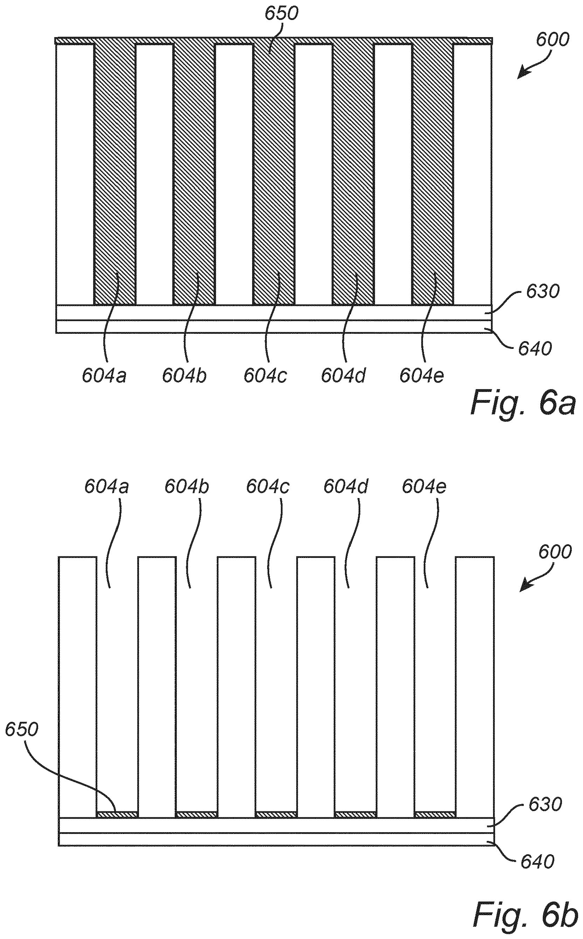

Referring now to Figs 6a-d, the device 600 may comprise an anti-fouling material 650. The anti-fouling material 650 may protect the electrode 630 from fouling, i.e., that substances stick to the electrode 630. The anti-fouling material 650 may also be configured to ensure that species that may otherwise interfere with sensing of the target analyte do not reach the electrode 630.

As shown in Figs 6a-d, the anti-fouling material 650 may be provided in different ways in relation to the electrode 630 and the partial volumes 604a-e. As shown in Fig. 6a, the anti-fouling material 650 may be configured to fill the entire partial volumes 604a-e and extend outside the partial volumes 604a-e. However, it should be realized that the anti-fouling material 650 may be configured to completely fill the entire partial volumes 604a-e or may be configured to partially fill the partial volumes 604a-e.

In these cases, the anti-fouling material 650 may cover the electrode 630 and may further be arranged at least in a portion of the partial volume 604a-e around the electrode 630. The anti-fouling material 650 may be configured to allow the target analyte to pass to the electrode 630 while preventing species that may interfere with the amperometric sensing of the target analyte from reaching the electrode 630.

The diffusion of the target analyte in the partial volumes 604a-e may thus at least partly be defined by a diffusion coefficient of the target analyte through the anti-fouling material 650. This diffusion coefficient is typically smaller. This implies that the time frame during which the depletion layer is substantially contained within the partial volumes 604a-e is longer and the read-out circuitry 640 may be controlled accordingly for ensuring that the electrical signal is properly read out. However, the detected current signal will also be lower, which implies that a signal-to-noise ratio may be lower than for a target analyte being provided in a fluid filling the partial volumes 604a-e.

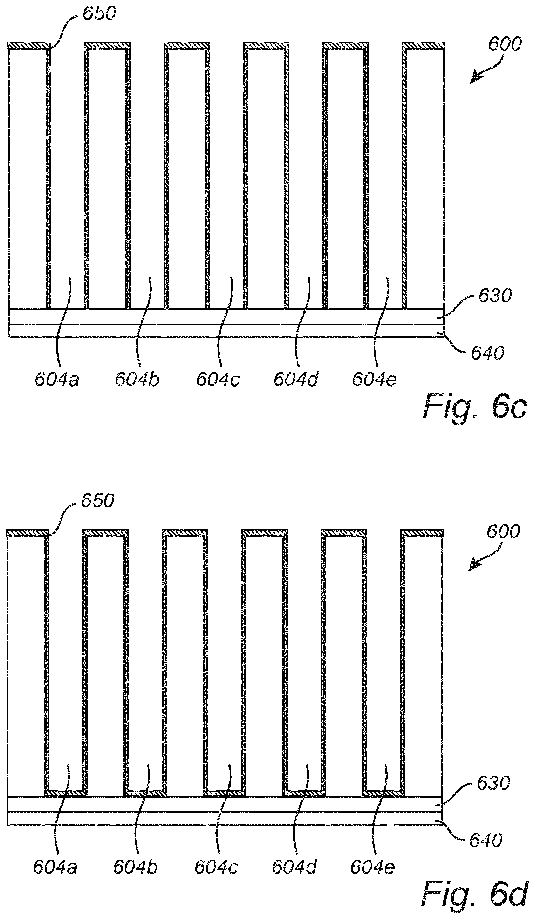

As shown in Figs 6b-d, the anti-fouling material may instead be provided only on a surface of the electrode 630 (Fig. 6b), on surfaces of circumferential wall(s) 612 and intermediate walls 616 (Fig. 6c), or on both (Fig. 6d). In the embodiments of Figs 6b-d, the diffusion coefficient of the target analyte is based on the diffusion coefficient in a fluid filling the partial volumes 604a-e. This may imply that the detected current signal may be larger than the current signal detected for the embodiment of Fig. 6a, such that an improved signal-to-noise ratio may be provided.

The anti-fouling material may still prevent species that may interfere with the amperometric sensing from reaching the electrode 630 and/or may ensure that a surface of the electrode 630 is maintained clean.

According to an embodiment, the anti-fouling material may comprise one or a combination of polyhydroxyethylmethacrylate (pHEMA), polyethyleneglycol (PEG), zwitterions, polyeugenol. This may be suitable for blocking undesired species such as proteins.

The device according to any of the above-described embodiments may for instance be used for amperometric sensing, wherein the target analyte is dissolved oxygen in a liquid. This may be useful in many applications. However, it should be realized that the device may be used for amperometric sensing of other target analytes.

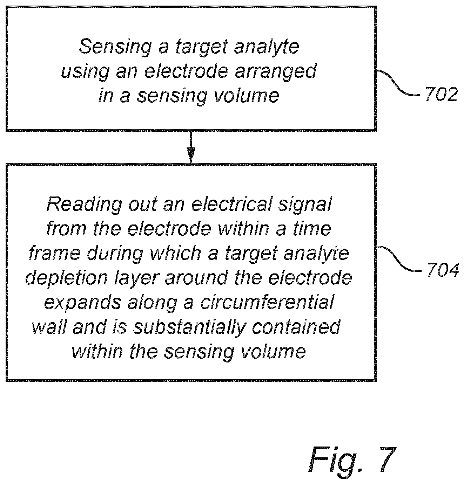

Referring now to Fig. 7, a method for amperometric sensing will be described.

The method comprises sensing 702 a target analyte using an electrode arranged in a sensing volume. The sensing volume is defined by an enclosing structure according to any of the embodiments described above. The enclosing structure comprises at least one circumferential wall defining an extension of the sensing volume along the circumferential wall, wherein the enclosing structure defines an inlet in the circumferential wall or at an end of the circumferential wall, wherein the inlet is configured to allow the target analyte to enter the sensing volume.

The amperometric sensing may involve applying a voltage signal or a current signal in a medium arranged in the sensing volume and possibly extending outside the sensing volume. The voltage or current signal may be applied based on the electrode arranged in the sensing volume and displaced from the inlet and based on an additional electrode which may be arranged outside the sensing volume. The applying of the voltage or current signal may cause a reaction by the target analyte with the electrode such that a corresponding electrical signal is provided by the electrode.

The method further comprises reading 704 out an electrical signal from the electrode, wherein read out of the electrical signal is performed within a time frame during which a target analyte depletion layer around the electrode expands along the circumferential wall and is substantially contained within the sensing volume, wherein the electrical signal is representative of a concentration of the target analyte in the sensing volume.

Thanks to the method, the amperometric sensing measurement may be performed in a manner insensitive to external factors, such as fluid flow external to the sensing volume.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

1. A device (100; 200; 300; 400; 500; 600) for amperometric sensing, said device comprising:

    an enclosing structure (110; 210) defining a sensing volume (102; 202, 204a-e; 304a-e; 404a-c; 504a-c; 604a-c), wherein the enclosing structure (110; 210) comprises at least one circumferential wall (112; 212; 412; 512) defining an extension of the sensing volume (102; 202, 204a-e; 304a-e; 404a-c; 504a-c; 604a-c) along the circumferential wall (112; 212; 412; 512), wherein the enclosing structure (110; 210) defines an inlet (114; 414; 514) in the circumferential wall (112; 212; 412; 512) or at an end of the circumferential wall (112; 212; 412; 512), wherein the inlet (114; 414; 514) is configured to allow a target analyte to enter the sensing volume (102; 202, 204a-e; 304a-e; 404a-c; 504a-c; 604a-c), an electrode (130; 230; 330a-e; 430; 530; 630) arranged in the sensing volume (102; 202, 204a-e; 304a-e; 404a-c; 504a-c; 604a-c) and displaced from the inlet (114; 414; 514), wherein the circumferential wall (112; 212; 412; 512) extends from a location of the electrode (130; 230; 330a-e; 430; 530; 630) to the inlet (114; 414; 514); and a read-out circuitry (140; 240; 640) connected to the electrode (130; 230; 330a-e; 430; 530; 630) and configured for read-out of an electrical signal from the electrode (130; 230; 330a-e; 430; 530; 630), wherein the read-out circuitry (140; 240; 640) is configured to read out the electrical signal within a time frame during which a target analyte depletion layer around the electrode (130; 230; 330a-e; 430; 530; 630) expands along the circumferential wall (112; 212; 412; 512) and is substantially contained within the sensing volume (102; 202, 204a-e; 304a-e; 404a-c; 504a-c; 604a-c), wherein the electrical signal is representative of a concentration of the target analyte in the sensing volume (102; 202, 204a-e; 304a-e; 404a-c; 504a-c; 604a-c).

2. The device for amperometric sensing according to claim 1, wherein the electrode (130; 230; 330a-e; 430; 530; 630) is configured to generate the electrical signal based on the electrochemical reaction of the target analyte.

3. The device for amperometric sensing according to claim 1 or 2, further comprising a substrate (106; 206; 306; 406; 506), wherein the circumferential wall (112; 212; 412; 512) is arranged on the substrate (106; 206; 306; 406; 506).

4. The device for amperometric sensing according to claim 3, wherein the read-out circuitry (140; 240; 640) is formed in a layer extending along the substrate (106; 206; 306; 406; 506).

5. The device for amperometric sensing according to any one of claims 3-4, wherein the circumferential wall (112; 212; 412) is configured to extend vertically from the substrate (106; 206; 306; 406).

6. The device for amperometric sensing according to any one of claims 3-4, wherein the circumferential wall (512) is configured to extend horizontally along the substrate (506).

7. The device for amperometric sensing according to any one of the preceding claims, wherein the enclosing structure (210) comprises a plurality of intermediate walls (216; 416; 516) within the sensing volume (202, 204a-e; 304a-e; 404a-c; 504a-c; 604a-c), wherein the intermediate walls (216; 416; 516) are configured to divide the sensing volume (202, 204a-e; 304a-e; 404a-c; 504a-c; 604a-c) into a plurality of partial volumes (204a-e; 304a-e; 404a-c; 504a-c; 604a-c), wherein the intermediate walls (216; 416; 516) are configured to extend along a direction of the at least one circumferential wall (212; 412; 512).

8. The device according to claim 7, wherein the electrode (230; 430; 630) is configured to extend into each of the partial volumes (204a-e; 404a-c; 604a-c) or wherein the electrode (330a-e; 530) forms part of a plurality of electrodes, wherein each of the plurality of electrodes is arranged in a respective partial volume (304a-e; 504a-c) and wherein the electrodes of the plurality of electrodes are connected for sensing a combined electrical signal.

9. The device for amperometric sensing according to any one of the preceding claims, wherein the circumferential wall (412) is tapered.

10. The device for amperometric sensing according to any one of the preceding claims, wherein the inlet (114; 414; 514) is configured to be arranged in relation to a bulk volume for receiving target analyte into the sensing volume (102; 202, 204a-e; 304a-e; 404a-c; 504a-c; 604a-c) from the bulk volume.

11. The device for amperometric sensing according to any one of the preceding claims, wherein the read-out circuitry (140; 240; 640) is configured to read out the electrical signal within the time frame $\tau$ defined by:

$$\tau < k\frac{h^2}{\pi D},$$

wherein k is a scaling factor, which is smaller than or equal to 20, such as smaller than or equal to 10, such as smaller than or equal to 1, h is a length along the circumferential wall (112; 212; 412; 512) between the location of the electrode (130; 230; 330a-e; 430; 530; 630) and the inlet (114; 414; 514), and D is a diffusion coefficient of the target analyte in the sensing volume (102; 202, 204a-e; 304a-e; 404a-c; 504a-c; 604a-c).

12. The device for amperometric sensing according to any one of the preceding claims, wherein a length (h) along the circumferential wall (112; 212; 412; 512) from the location of the electrode (130; 230; 330a-e; 430; 530; 630) to the inlet (114; 414; 514) is larger than or equal to half of a maximum width (w) of a cross-section of the sensing volume (102; 202, 204a-e; 304a-e; 404a-c; 504a-c; 604a-c) at the location of the electrode (130; 230; 330a-e; 430; 530; 630).

13. The device for amperometric sensing according to any one of the preceding claims, further comprising an additional electrode configured to apply a voltage at least to the sensing volume (102; 202, 204a-e; 304a-e; 404a-c; 504a-c; 604a-c).

14. The device for amperometric sensing according to any one of the preceding claims, wherein the sensing volume comprises an anti-fouling material (650) that is configured to at least partially block species interfering with sensing of the target analyte.

15. A method for amperometric sensing, said method comprising:

sensing (702) a target analyte using an electrode arranged in a sensing volume, wherein the sensing volume is defined by an enclosing structure comprising at least one circumferential wall defining an extension of the sensing volume along the circumferential wall, wherein the enclosing structure defines an inlet in the circumferential wall or at an end of the circumferential wall, wherein the inlet is configured to allow the target analyte to enter the sensing volume;
reading (704) out an electrical signal from the electrode, wherein read out of the electrical signal is performed within a time frame during which a target analyte depletion layer around the electrode expands along the circumferential wall and is substantially contained within the sensing volume, wherein the electrical signal is representative of a concentration of the target analyte in the sensing volume.

Fig. 1

Fig. 2

*Fig. 3*

Fig. 4a

Fig. 4b

Fig. 5a

Fig. 5b

Fig. 6a

Fig. 6b

650

600

630

640

604a    604b    604c    604d    604e

*Fig. 6c*

650

600

630

640

604a    604b    604c    604d    604e

*Fig. 6d*

Sensing a target analyte
using an electrode arranged
in a sensing volume — 702

Reading out an electrical signal
from the electrode within a time
frame during which a target analyte
depletion layer around the electrode — 704
expands along a circumferential
wall and is substantially contained
within the sensing volume

Fig. 7

## EUROPEAN SEARCH REPORT

**Application Number**

EP 24 17 4555

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/057771 A1 (KOVACS GREGORY T [US] ET AL) 16 March 2006 (2006-03-16) | 1-13,15 | INV. G01N27/49 G01N33/483 |
| Y | * abstract * * paragraph [0038] - paragraph [0095] * * figure 1 * * figures 2a, 2b, 2c * | 14 | |
| X | HUANG MENG ET AL: "Surface-modified CMOS IC electrochemical sensor array targeting single chromaffin cells for highly parallel amperometry measurements", PFLÜGERS ARCHIV - EUROPEAN JOURNAL OF PHYSIOLOGY, SPRINGER BERLIN HEIDELBERG, BERLIN/HEIDELBERG, vol. 470, no. 1, 9 September 2017 (2017-09-09), pages 113-123, XP036392407, ISSN: 0031-6768, DOI: 10.1007/S00424-017-2067-Y [retrieved on 2017-09-09] | 1-9,12, 13,15 | |
| Y | * abstract * * Section: Amperometry sensor array fabrication * * figures 1a, 1b, 1c * * Section: Biosensor recording and data acquisition and analysis * * Section: Live chromaffin cell recordings * | 14 | **TECHNICAL FIELDS SEARCHED (IPC)** G01N |
| X | US 2019/277799 A1 (DAVEY MELVILLE [US] ET AL) 12 September 2019 (2019-09-12) * abstract * * column 1, line 32 - column 3, line 51 * * column 4, line 22 - column 8, line 49 * * figures 7, 8, 9 * | 1,15 | |

-/--

The present search report has been drawn up for all claims

| Place of search | Date of completion of the search | Examiner |
|---|---|---|
| Munich | 31 October 2024 | Knoll, Stephan |

page 1 of 2

Europäisches
Patentamt

European
Patent Office

Office européen
des brevets

# EUROPEAN SEARCH REPORT

Application Number

EP 24 17 4555

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2019/195827 A1 (MARTENS KOEN [BE] ET AL) 27 June 2019 (2019-06-27) * paragraphs [0005], [0011], [0085], [0113] * ----- | 14 | |
| | | | **TECHNICAL FIELDS SEARCHED (IPC)** |

The present search report has been drawn up for all claims

| Place of search | Date of completion of the search | Examiner |
|---|---|---|
| Munich | 31 October 2024 | Knoll, Stephan |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.................................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 17 4555

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2024

| Patent document cited in search report | | Publication date | Patent family member(s) | | Publication date |
|---|---|---|---|---|---|
| US 2006057771 | A1 | 16-03-2006 | NONE | | |
| US 2019277799 | A1 | 12-09-2019 | US | 2012173159 A1 | 05-07-2012 |
| | | | US | 2019277799 A1 | 12-09-2019 |
| | | | US | 2022283117 A1 | 08-09-2022 |
| | | | US | 2024361272 A1 | 31-10-2024 |
| | | | WO | 2012092515 A2 | 05-07-2012 |
| US 2019195827 | A1 | 27-06-2019 | EP | 3502681 A1 | 26-06-2019 |
| | | | US | 2019195827 A1 | 27-06-2019 |

EPO FORM P0459

For more details about this annex : see Official Journal of the European Patent Office, No. 12/82